# EUROPEAN PATENT APPLICATION

(11) **EP 4 738 123 A1**
(43) Date of publication of application: **06.05.2026**
(21) Application number: 25170908.5
(22) Date of filing: 16.04.2025
(51) Int. Cl.: G06F 11/07, G06F 1/24, G06F 11/14

(54) **METHOD FOR RESETTING HARDWARE UNIT IN INTEGRATED CIRCUIT AND INTEGRATED CIRCUIT**

(30) Priority: 31.10.2024 CN 202411537023
(71) Applicant: XG TECH PTE. LTD., Singapore 179098 (SG)
(72) Inventor: XU, Zuo, 179098 Singapore (SG); YU, Jianfeng, 179098 Singapore (SG)
(74) Representative: v. Bezold & Partner Patentanwälte - PartG mbB

(57) **Abstract**

Disclosed are a method and an apparatus for resetting a hardware unit in an integrated circuit. When it is detected that a first hardware unit in a first operating system needs to be reset, before the first hardware unit is reset, based on a working status of an interface between the first hardware unit and a bus, an adjustment strategy is determined for a data channel between a second hardware unit in a second operating system that shares the bus with the first operating system and the first hardware unit. In this case, by adjusting a flow control status of the data channel, an unfinished access request between the first hardware unit and the second hardware unit is completed, and transmission of a new access request generated by the first hardware unit to the bus is intercepted.

## Description

### FIELD OF THE INVENTION

This disclosure relates to the technical field of integrated circuits, and in particular, to a method for resetting a hardware unit in an integrated circuit and an integrated circuit.

### BACKGROUND OF THE INVENTION

A system on chip (SoC), also referred to as an integrated circuit, may include a plurality of hardware units that can support running of a plurality of operating systems (OS), so that the plurality of operating systems can run on the integrated circuit. When running the corresponding operating systems respectively, the plurality of hardware units may share some hardware resources in the integrated circuit, such as a bus. In other words, the plurality of hardware units may access each other through the bus.

When an exception occurs in the operating system, the hardware unit that causes the anomaly ("abnormal hardware unit" for short below) may be reset to restore normal operation of the operating system that has the anomaly ("abnormal operating system" for short below).

### SUMMARY OF THE INVENTION

During resetting of an abnormal hardware unit in an abnormal operating system, an anomaly may be caused to a bus because an access request of which the transmission is not finished cannot be processed properly, and the abnormal hardware unit may continue to transmit a new access request to the bus. As a result, anomalies occur to the bus, causing anomalies to other hardware units sharing the bus, which further causes anomalies to operating systems running through the other hardware units.

To resolve the foregoing technical problem, this disclosure provides a method for resetting a hardware unit in an integrated circuit and an integrated circuit, which can resolve a problem that during resetting of an abnormal hardware unit in an abnormal operating system, anomalies occur to other hardware units sharing a bus, and anomalies may also occur to operating systems running through the other hardware units.

According to a first aspect of this disclosure, a method for resetting a hardware unit in an integrated circuit is provided, including: reading a status of a reset signal from a register, where the reset signal requests to reset a first hardware unit, and the first hardware unit corresponds to a first operating system; determining a working status of an interface between the first hardware unit and a bus based on the status of the reset signal; determining adjustment strategies for two or more data channels between the first hardware unit and a second hardware unit based on the working status of the interface, wherein the second hardware unit corresponds to a second operating system; adjusting a flow control status of the data channel based on the adjustment strategy; and resetting the first hardware unit based on the working status of the interface after adjusting the flow control status of the data channel.

According to a second aspect of this disclosure, an integrated circuit is provided, including: a first hardware unit corresponding to a first operating system; a second hardware unit corresponding to a second operating system; a reset security module corresponding to the first hardware unit; and a register storing a status of a reset signal, wherein the reset signal requests to reset the first hardware unit, wherein the reset security module is configured to read the status of the reset signal from the register; the reset security module is further configured to determine a working status of an interface between the first hardware unit and a bus based on the status of the reset signal; the reset security module is further configured to determine adjustment strategies for two or more data channels between the first hardware unit and the second hardware unit based on the working status of the interface; the reset security module is further configured to adjust a flow control status of the data channel based on the adjustment strategy; and the reset security module is further configured to reset the first hardware unit based on the working status of the interface after adjusting the flow control status of the data channel.

According to a third aspect of this disclosure, a computer readable storage medium is provided. The storage medium stores a computer program, and the computer program is used for implementing the method for resetting a hardware unit in an integrated circuit according to the first aspect.

According to a fourth aspect of this disclosure, an electronic device is provided. The electronic device includes: a processor; and a memory configured to store processor-executable instructions, wherein the processor is configured to read the executable instructions from the memory, and execute the instructions to implement the method for resetting a hardware unit in an integrated circuit according to the first aspect. Alternatively, the electronic device includes the integrated circuit according to the second aspect.

According to a fifth aspect of this disclosure, a computer program product is provided. When instructions in the computer program product are executed by a processor, the method for resetting a hardware unit in an integrated circuit according to the first aspect is implemented.

According to the method for resetting a hardware unit in an integrated circuit that is provided in this disclosure, when it is detected that the first hardware unit in the first operating system needs to be reset, before the first hardware unit is reset, based on the working status of the interface between the first hardware unit and the bus, the adjustment strategy is determined for the data channel between the second hardware unit in the second operating system that shares the bus with the first operating system and the first hardware unit. In this case, by adjusting the flow control status of the data channel, an unfinished access request between the first hardware unit and the second hardware unit is completed, and transmission of a new access request generated by the first hardware unit to the bus is intercepted. Therefore, during the resetting of the first hardware unit, the bus can still work normally, and the second hardware unit sharing the bus can still work normally. Therefore, the second operating system running through the second hardware unit can still operate normally, so that operational stability of each operating system is greatly improved.

### BRIEF DESCRIPTION OF THE DRAWINGS

FIG. 1 is a schematic architectural diagram of an integrated circuit according to an exemplary embodiment of this disclosure;
FIG. 2 is a schematic architectural diagram of an integrated circuit according to another exemplary embodiment of this disclosure;
FIG. 3 is a schematic architectural diagram of an integrated circuit according to still another exemplary embodiment of this disclosure;
FIG. 4 is a schematic flowchart of a method for resetting a hardware unit in an integrated circuit according to an exemplary embodiment of this disclosure;
FIG. 5 is a schematic flowchart of a method for resetting a hardware unit in an integrated circuit according to another exemplary embodiment of this disclosure;
FIG. 6 is a schematic flowchart of a method for resetting a hardware unit in an integrated circuit according to still another exemplary embodiment of this disclosure;
FIG. 7 is a schematic flowchart of a method for resetting a hardware unit in an integrated circuit according to yet another exemplary embodiment of this disclosure;
FIG. 8 is a schematic flowchart of a method for resetting a hardware unit in an integrated circuit according to still yet another exemplary embodiment of this disclosure;
FIG. 9 is a schematic flowchart of a method for resetting a hardware unit in an integrated circuit according to a further exemplary embodiment of this disclosure; and
FIG. 10 is a schematic diagram of a structure of an electronic device according to an exemplary embodiment of this disclosure.

### DETAILED DESCRIPTION OF THE EMBODIMENTS

To explain this disclosure, exemplary embodiments of this disclosure are described below in detail with reference to accompanying drawings. Obviously, the embodiments described are merely some, rather than all of embodiments of this disclosure. It should be understood that this disclosure is not limited by the exemplary embodiments.

It should be noted that unless otherwise specified, the scope of this disclosure is not limited by relative arrangement, numeric expressions, and numerical values of components and steps described in these embodiments.

### Application overview

A system on chip (SoC), also referred to as an integrated circuit, may include a plurality of hardware units that can support running of a plurality of operating systems (OS), so that the plurality of operating systems can run on the integrated circuit. When running the corresponding operating systems respectively, the plurality of hardware units may share some hardware resources in the integrated circuit, such as a bus. In other words, the plurality of hardware units may access each other through the bus.

When an anomaly occurs in the operating system, an abnormal hardware unit may be reset to restore normal operation of the abnormal operating system.

However, during the resetting of the abnormal hardware unit, an anomaly may be caused to a bus because an access request of which the transmission is not finished cannot be processed properly and the abnormal hardware unit may continue to transmit a new access request to the bus. As a result, anomalies occur to the bus, causing anomalies to other hardware units sharing the bus, which further causes anomalies to operating systems running through the other hardware units.

To resolve the foregoing technical problem, embodiments of this disclosure provide an apparatus and a method for resetting a hardware unit in an integrated circuit.

The apparatus may include: a first hardware unit corresponding to a first operating system; a second hardware unit corresponding to a second operating system; a reset security module corresponding to the first hardware unit; and a register storing a status of a reset signal, wherein the reset signal requests to reset the first hardware unit. The reset security module is configured to read the status of the reset signal from the register. The reset security module is further configured to: determine a working status of an interface between the first hardware unit and a bus based on the status of the reset signal; the reset security module is further configured to determine adjustment strategies for two or more data channels between the first hardware unit and the second hardware unit based on the working status of the interface; the reset security module is further configured to adjust a flow control status of the data channel based on the adjustment strategy; and the reset security module is further configured to reset the first hardware unit based on the working status of the interface after adjusting the flow control status of the data channel.

The method includes: when detecting that a first hardware unit in a first operating system needs to be reset, before resetting the first hardware unit, determining, based on a working status of an interface between the first hardware unit and a bus, an adjustment strategy for a data channel between a second hardware unit in a second operating system that shares the bus with the first operating system and the first hardware unit. In this case, by adjusting a flow control status of the data channel, an unfinished access request between the first hardware unit and the second hardware unit is completed, and transmission of a new access request generated by the first hardware unit to the bus is intercepted. Therefore, during the resetting of the first hardware unit, the bus can still work normally, and the second hardware unit sharing the bus can still work normally. Therefore, the second operating system running through the second hardware unit can still operate normally, so that operational stability of each operating system is greatly improved.

The method for resetting a hardware unit in an integrated circuit in this disclosure is further described below in combination with accompanying drawings.

### Exemplary system

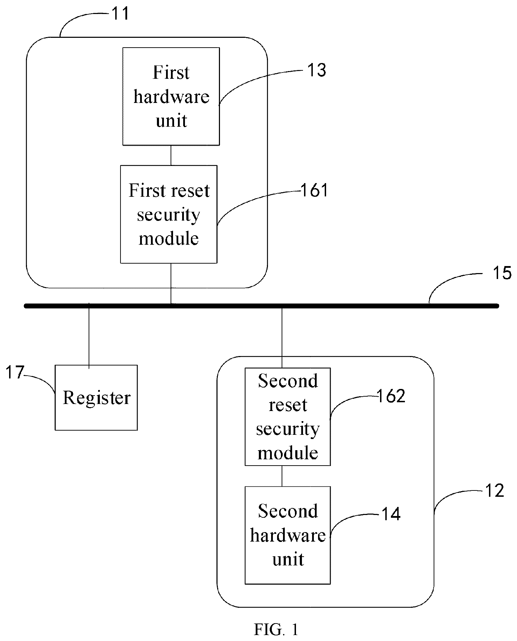

FIG. 1 is a schematic architectural diagram of an integrated circuit according to an exemplary embodiment of this disclosure.

As shown in FIG. 1, the integrated circuit may run a plurality of operating systems, for example, a first operating system 11 and a second operating system 12. Each operating system may be run by at least one hardware unit. For example, the first operating system 11 may be run by a first hardware unit 13, and the second operating system 12 may be run by a second hardware unit 14. When running the corresponding operating systems respectively, the first hardware unit 13 and the second hardware unit 14 may share a bus 15 in the integrated circuit. In other words, the first hardware unit 13 and the second hardware unit 14 may access each other through the bus 15.

The integrated circuit further includes reset security modules that are disposed in one-to-one correspondence to the hardware units, and the hardware units are connected to the bus 15 through the corresponding reset security modules. For example, the first hardware unit 13 is connected to the bus 15 through a first reset security module 161, and the second hardware unit 14 is connected to the bus 15 through a second reset security module 162.

In some embodiments, before the hardware unit is reset, a status of an interface between this hardware unit and the bus may be monitored by the reset security module corresponding to this hardware unit, and a flow control status of a data channel between this hardware unit and another hardware unit may be adjusted based on the status of the interface by the reset security module.

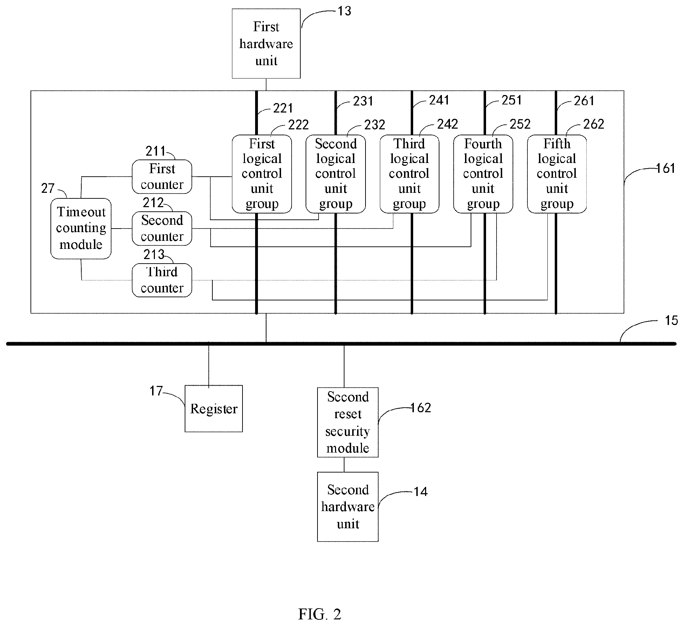

FIG. 2 is a schematic architectural diagram of an integrated circuit according to another exemplary embodiment of this disclosure.

In some examples, based on the architecture shown in FIG. 1, as shown in FIG. 2, taking the first reset security module 161 as an example, a structure of the reset security module is exemplarily illustrated. The first reset security module 161 may include three counters, such as a first counter 211, which may also be referred to as a read command counter; a second counter 212, which may also be referred to as a write command counter; and a third counter 213, which may also be referred to as a write data counter. The first counter 211 is configured to count the number of read command requests of which the transmissions are not finished between the first hardware unit 13 and the second hardware unit 14. The second counter 212 is configured to count the number of write command requests of which the transmissions are not finished between the first hardware unit 13 and the second hardware unit 14. The third counter 213 is configured to count the number of write data requests of which the transmission are not finished between the first hardware unit 13 and the second hardware unit 14.

The first reset security module 161 may include a plurality of logical control unit groups, each of which may include at least one logical control unit. Different logical control unit groups correspond to data channels with different request types, and each logical control unit group is configured to control the flow control status of the data channel of a corresponding channel type.

For example, a first logical control unit group 222 corresponds to a data channel 221 for transmitting read command requests ("read command channel" for short below), and is configured to control a flow control status of the read command channel.

For example, a second logical control unit group 232 corresponds to a data channel for transmitting read data requests ("read data channel" for short below) 231, and is configured to control a flow control status of the read data channel.

For example, a third logical control unit group 242 corresponds to a data channel for transmitting write command requests ("write command channel" for short below) 241, and is configured to control a flow control status of the write command channel.

For example, a fourth logical control unit group 252 corresponds to a data channel for transmitting write response requests ("write response channel" for short below) 251, and is configured to control a flow control status of the write response channel.

For example, a fifth logical control unit group 262 corresponds to a data channel for transmitting a write data request ("write data channel" for short below) 261, and is configured to control a flow control status of the write data channel.

The flow control status of the data channel includes pass-through and blocking. If the flow control status of the data channel is pass-through, it indicates that access requests are allowed to be transmitted through the data channel. If the flow control status of the data channel is blocking, it indicates that access requests are not allowed to be transmitted through the data channel.

The reset security module may further include a timeout counting module. As shown in FIG. 2, the first reset security module 161 may include a timeout counting module 27, which is configured to detect whether a reset request succeeds. Whether the reset request succeeds indicates whether the first reset security module 161 resets the first hardware unit 13 based on the reset request. If the reset request succeeds, the first reset security module 161 resets the first hardware unit 13 based on the reset request. If the reset request fails, the first reset security module 161 does not reset the first hardware unit 13 based on the reset request.

In some embodiments, before being reset, the hardware unit may also be isolated from the bus by using the reset security module.

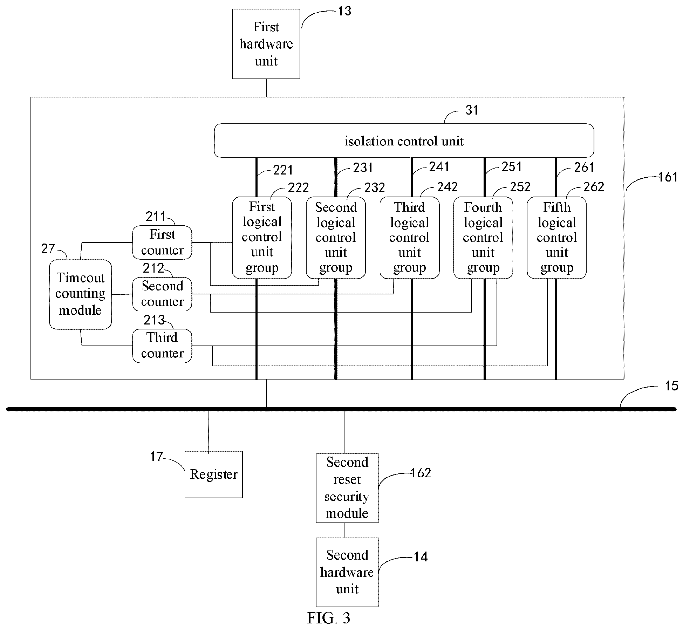

FIG. 3 is a schematic architectural diagram of an integrated circuit according to still another exemplary embodiment of this disclosure.

In some examples, based on the structure of the first reset security module 161 shown in FIG. 2, as shown in FIG. 3, the first reset security module 161 also includes an isolation control unit 31, which is configured to isolate the first hardware unit 13 from the bus 15.

As shown in FIG. 1, the integrated circuit also includes a register 17, which may be configured to store a status of a reset signal.

### Exemplary method

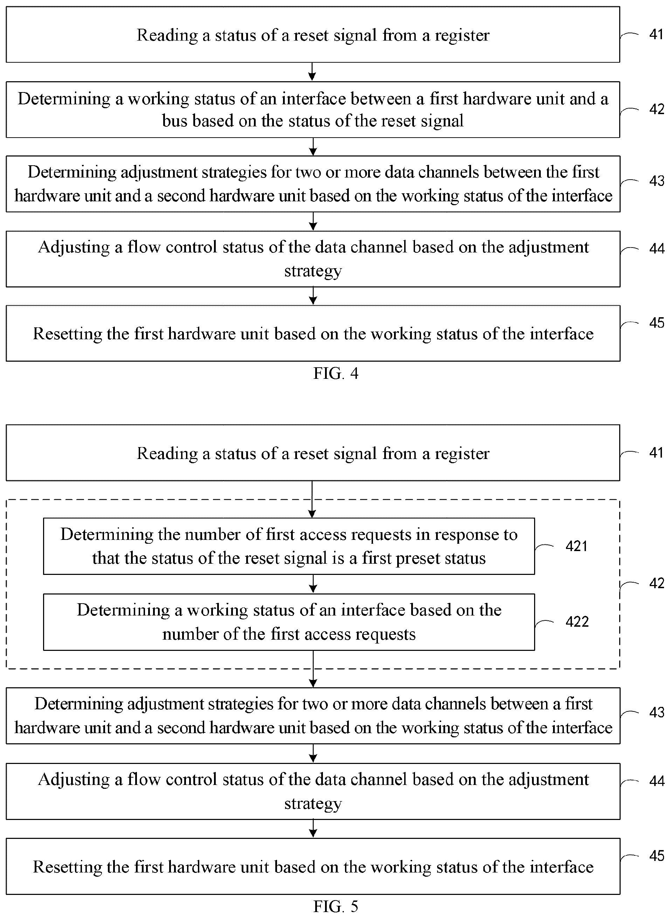

FIG. 4 is a schematic flowchart of a method for resetting a hardware unit in an integrated circuit according to an exemplary embodiment of this disclosure. This embodiment may be applied to an electronic device, which may include an integrated circuit as shown in any one of FIG. 1 to FIG. 3. The method for resetting a hardware unit in an integrated circuit is described in this embodiment of this disclosure by using an example in which the hardware unit that needs to be reset is a first hardware unit 13.

As shown in FIG. 4, the method includes the following steps 41 to 45.

Step 41. Reading a status of a reset signal from a register.

A register 17 stores status information of the reset signal. The reset signal requests to reset the first hardware unit 13, and the status information of the reset signal may be a status bit related to the reset signal.

The reset signal may carry the status information, which indicates the status of the reset signal. The status of the reset signal indicates whether to initiate a reset request to the hardware unit.

For example, the status of the reset signal may include a first preset status and a fourth preset status. The first preset status indicates that the reset request is initiated, and may also be referred to as a valid status. The fourth preset status indicates that the reset request is not initiated, and may also be referred to as an invalid status.

In some examples, the first preset status of the reset signal may be a high level status, and the fourth preset status of the reset signal may be a low level status.

The register 17 may also store identification information of the hardware unit that is requested to be reset by the reset signal. For example, if the reset signal requests to reset the first hardware unit 13, the register 17 stores identification information of the first hardware unit 13.

In some examples, different hardware units may correspond to different registers 17, thereby facilitating more accurate management of relevant information of reset signals that request to reset various hardware units.

A first reset security module 161 corresponding to the first hardware unit 13 may read the status information of the reset signal that requests to reset the first hardware unit 13 from the register 17, and determine the status of the reset signal based on the status information, that is, determine whether to initiate a reset request to the first hardware unit 13.

Step 42. Determining a working status of an interface between the first hardware unit and a bus based on the status of the reset signal.

A working status of an interface between the first hardware unit 13 and a bus 15 indicates whether there is an access request of which the transmission is not finished between the first hardware unit 13 and the second hardware unit 14.

For example, the working status of the interface may include a second preset status and a third preset status. The second preset status indicates that there is an access request of which the transmission is not finished between the first hardware unit 13 and the second hardware unit 14, and may also be referred to as a non-idle status. The third preset status indicates that there is no access request of which the transmission is not finished between the first hardware unit 13 and the second hardware unit 14, and may also be referred to as an idle status.

It may be understood that during resetting of the first hardware unit 13, if the working status of the interface is the second preset status, that is, if the working status of the interface is the non-idle status, it indicates that there is an access request of which the transmission is not finished between the first hardware unit 13 and the second hardware unit 14. In this case, the first hardware unit 13 may continue to generate an access request for accessing the second hardware unit 14 and transmit the generated new access request to the bus 15. Based on this, the resetting of the first hardware unit 13 may affect the bus 15, which further affects the second hardware unit 14. If the working status of the interface is the third preset status, that is, if the working status of the interface is the idle status, it indicates that there is no access request of which the transmission is not finished between the first hardware unit 13 and the second hardware unit 14. However, the first hardware unit 13 may continue to generate an access request for accessing the second hardware unit 14 and transmit the generated new access request to the bus 15. Based on this, the resetting of the first hardware unit 13 may also affect the bus 15 and the second hardware unit 14.

The first reset security module 161 may determine, based on the status of the reset signal, whether to initiate a reset request to the first hardware unit 13.

If the status of the reset signal indicates that the reset request is initiated to the first hardware unit 13, to avoid the impact of the resetting of the first hardware unit 13 on the bus 15 and the second hardware unit 14, the first reset security module 161 needs to determine the working status of the interface between the first hardware unit 13 and the bus 15, so that access requests that affect the bus 15 and the second hardware unit 14 during the resetting of the first hardware unit 13 are determined later based on the working status of the interface. Thus, these access requests are processed accordingly.

If the status of the reset signal indicates that the reset request is not initiated to the first hardware unit 13, the first reset security module 161 may determine that there is no need to determine the working status of the interface. In other words, it may be determined that there is no need to process the access request between the first hardware unit 13 and the second hardware unit 14.

Step 43. Determining adjustment strategies for two or more data channels between the first hardware unit and a second hardware unit based on the working status of the interface.

The first reset security module 161 may determine, based on the working status of the interface, the access requests that affect the bus 15 and the second hardware unit 14 during the resetting of the first hardware unit 13; and may determine, based on these access requests, a flow control state to which each data channel between the first hardware unit 13 and the second hardware unit 14 needs to be adjusted. Further, the first reset security module 161 may determine the corresponding adjustment strategy of each data channel based on the flow control status to which each data channel needs to be adjusted. This adjustment strategy includes a manner of adjusting a flow control status of a corresponding data channel to a flow control status that needs to be adjusted to. For example, this manner may include adjusting a level status of a signal corresponding to a request type of the access request transmitted by the data channel.

Step 44. Adjusting a flow control status of the data channel based on the adjustment strategy.

The first reset security module 161 adjusts the flow control status of the data channel based on the adjustment strategy. The first reset security module 161 may determine, based on the adjustment strategy, a target logical control unit group that is used for adjusting the flow control status of the data channel, and adjust the flow control status of the corresponding data channel by using this target logical control unit group.

After the flow control status of the data channel is adjusted by the first reset security module 161, the access request of which the transmission is not finished between the first hardware unit 13 and the second hardware unit 14 may be transmitted through the data channel with the adjusted flow control status, while the new access request generated by the first hardware unit 13 cannot be transmitted to the bus 15 through the data channel with the adjusted flow control status. In this way, before the first hardware unit 13 is reset, an effect of clearing the access request of which the transmission is not finished between the first hardware unit 13 and the second hardware unit 14, and intercepting the new access request generated by the first hardware unit 13 may be achieved.

Step 45. Resetting the first hardware unit based on the working status of the interface.

After adjusting the flow control status of the data channel, the first reset security module 161 may determine the working status of the interface again.

If the working status of the interface is the third preset status, it indicates that the resetting of the first hardware unit 13 does not affect the bus 15 and the second hardware unit 14, and the first reset security module 161 may reset the first hardware unit 13. For example, the first reset security module 161 may generate first indication information, which indicates success of the reset request. In other words, the first hardware unit 13 may be reset. The first reset security module 161 may write the first indication information into the register 17, and may reset the first hardware unit 13 based on the first indication information.

If the working status of the interface is the second preset status, it indicates that the resetting of the first hardware unit 13 may affect the bus 15 and the second hardware unit 14. In this case, the first hardware unit 13 cannot be reset currently, but needs to be reset after the working status of the interface changes to the third preset status.

According to the method for resetting a hardware unit in an integrated circuit that is provided in this embodiment of this disclosure, if the first reset security module 161 determines that the first hardware unit 13 in a first operating system 11 needs to be reset, before the first hardware unit 13 is reset, based on the working status of the interface between the first hardware unit 13 and the bus 15 and by adjusting the flow control status of the data channel between the first hardware unit 13 and the second hardware unit 14, the access request of which the transmission is not finished may be completed between the first hardware unit 13 and the second hardware unit 14, and the transmission of the new access request generated by the first hardware unit 13 to the bus 15 may be intercepted. Therefore, during the resetting of the first hardware unit 13, the bus 15 can still work normally, and the second hardware unit 14 sharing the bus 15 can still work normally. Therefore, a second operating system 12 running through the second hardware unit 14 can still operate normally, so that operational stability of the operating system 12 is greatly improved.

FIG. 5 is a schematic flowchart of a method for resetting a hardware unit in an integrated circuit according to another exemplary embodiment of this disclosure.

In some embodiments, as shown in FIG. 5, on the basis of the embodiment shown in FIG. 4, step 42 may include steps 421 and 422.

Step 421. Determining the number of first access requests in response to that the status of the reset signal is a first preset status.

In response to that the status of the reset signal is the first preset status, the first reset security module 161 may determine to initiate a reset request to the first hardware unit 13. In other words, the first hardware unit 13 needs to be reset. Based on this, before resetting the first hardware unit 13, the first reset security module 161 determines the working status of the interface between the first hardware unit 13 and the bus 15.

The first reset security module 161 determines the number of the first access requests on the basis that the working status of the interface indicates whether there is an access request of which the transmission is not finished between the first hardware unit 13 and the second hardware unit 14. The first access request is an access request of which the transmission is not finished among access requests for the first hardware unit 13 to request to access the second hardware unit 14.

Step 422. Determining the working status of the interface based on the number of the first access requests.

If the number of the first access requests is 0, it indicates that there are no access requests of which the transmissions are not finished. Therefore, the first reset security module 161 may determine that the working status of the interface is the third preset status, that is, the idle status.

If the number of the first access requests is greater than 0, it indicates that there are access requests of which the transmissions are not finished. Therefore, the first reset security module 161 may determine that the working status of the interface is the second preset status, that is, the non-idle status.

According to the method for resetting a hardware unit in an integrated circuit that is provided in this embodiment of this disclosure, after determining that the first hardware unit 13 needs to be reset, the first reset security module 161 may accurately determine the working status of the interface between the first hardware unit 13 and the bus 15 based on the number of the first access requests of which the transmissions are not finished between the first hardware unit 13 and the second hardware unit 14. In this way, accuracy of determining the adjustment strategy for the data channel based on the working status of the interface may be ensured.

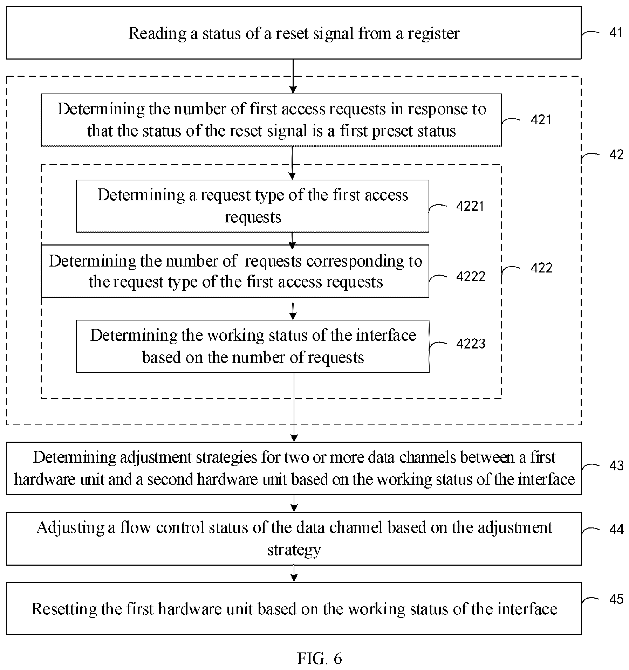

FIG. 6 is a schematic flowchart of a method for resetting a hardware unit in an integrated circuit according to still another exemplary embodiment of this disclosure.

In some embodiments, as shown in FIG. 6, on the basis of the embodiment shown in FIG. 5, step 422 may include steps 4221 to 4223.

Step 4221. Determining a request type of the first access requests.

Request types of the first access requests may include a read command request, a write command request, and a write data request.

Step 4222. Determining a request number corresponding to the request type of the first access requests.

In combination with FIG. 2 and FIG. 3, a request number of read command requests may be counted by using a first counter 211, a request number of write command requests may be counted by using a second counter 212, and a request number of write data requests may be counted by using a third counter 213.

For example, the first counter 211 adds 1 to a count each time detecting a read command request transmitted by the first hardware unit 13 through a read command channel 221, and subtracts 1 from the count each time detecting a valid RLAST signal transmitted by the second hardware unit 14 through a read data channel 231. The first reset security module 161 may read the count of the first counter 211, and determine this count as the request number of the read command requests in the first access requests.

For example, the second counter 212 adds 1 to a count each time detecting a write command request transmitted by the first hardware unit 13 through a write command channel 241, and subtracts 1 from the count each time detecting a write response transmitted by the second hardware unit 14 through a write response channel 251. The first reset security module 161 may read the count of the second counter 212, and determine this count as the request number of the write command requests in the first access requests.

For example, the third counter 213 adds 1 to a count each time detecting a WLAST signal in a write data request transmitted by the first hardware unit 13 through a write data channel 261, and subtracts 1 from the count each time detecting a write response transmitted by the second hardware unit 14 through the write response channel 251. The first reset security module 161 may read the count of the third counter 213, and determine this count as the request number of the write data requests in the first access requests.

Step 4223. Determining the working status of the interface based on the request number.

If the request number of the read command requests is greater than 0, the first reset security module 161 may determine that a data channel corresponding to a read operation is in the non-idle status. If the request number of the read command requests is equal to 0, the first reset security module 161 may determine that the data channel corresponding to the read operation is in the idle status.

If the request number corresponding to at least one request type of the write command request and the write data request is greater than 0, the first reset security module 161 may determine that a data channel corresponding to a write operation is in the non-idle status. If the request number of the write command requests and the request number of the write data requests are both equal to 0, and the third counter 213 determines that a detected WVALID signal that is transmitted by the first hardware unit 13 through the write data channel 261 corresponds to a last write data request, or the request number of the write command requests and the request number of the write data requests are both equal to 0, and the third counter 213 does not detect the WVALID signal that is transmitted by the first hardware unit 13 through the write data channel 261, the first reset security module 161 may determine that the data channel corresponding to the write operation is in the idle status.

The first reset security module 161 determines the working status of the interface based on the status of the data channel corresponding to the read operation and the status of the data channel corresponding to the write operation. If at least one of the status of the data channel corresponding to the read operation and the status of the data channel corresponding to the write operation is the non-idle status, the first reset security module 161 may determine that the working status of the interface is the second preset status, that is, the non-idle status. If the status of the data channel corresponding to the read operation and the status of the data channel corresponding to the write operation are both idle statuses, the first reset security module 161 may determine that the working status of the interface is the third preset status, that is, the idle status.

According to the method for resetting a hardware unit in an integrated circuit that is provided in this embodiment of this disclosure, after determining that the first hardware unit 13 needs to be reset, the first reset security module 161 may classify and monitor the first access requests of different request types, so that the request types corresponding to the first access requests may be quickly determined after it is determined that the first access requests exist. Because the request type is associated with the data channel, efficiency of determining the adjustment strategy for the data channel may be improved.

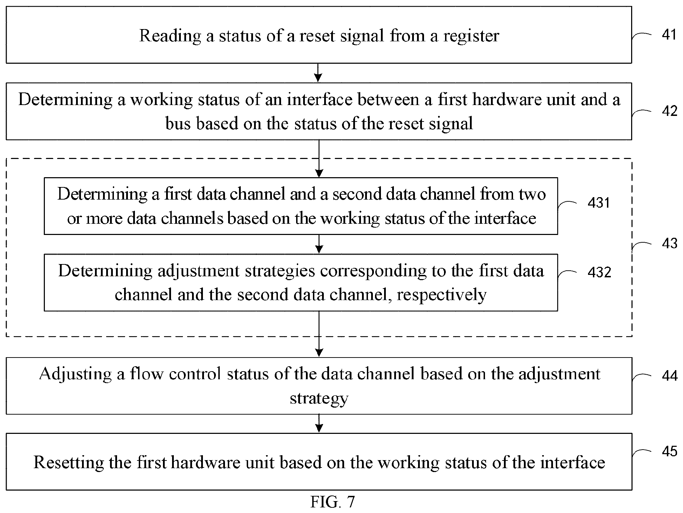

FIG. 7 is a schematic flowchart of a method for resetting a hardware unit in an integrated circuit according to yet another exemplary embodiment of this disclosure.

In some embodiments, as shown in FIG. 7, on the basis of the embodiment shown in FIG. 4, step 43 may include steps 431 and 432.

Step 431. Determining a first data channel and a second data channel from the two or more data channels based on the working status of the interface.

A flow control status to which the first data channel needs to be adjusted is blocking, and a flow control status to which the second data channel needs to be adjusted is pass-through.

In some examples, if the working status of the interface is the second preset status, that is, the non-idle status, the first reset security module 161 determines operation types corresponding to first access requests. The operation types corresponding to the first access requests may include read operations and write operations. A read command request in the first access requests corresponds to the read operation, and a write command request and a write data request in the first access request corresponds to the write operation.

The first reset security module 161 determines the first data channel and the second data channel from the two or more data channels between the first hardware unit 13 and the second hardware unit 14 based on the operation types corresponding to the first access requests.

If the operation type corresponding to the first access request is the read operation, the first reset security module 161 may determine that the first data channel includes a read command channel 221 and the second data channel includes a read data channel 231.

If the operation type corresponding to the first access request is the write operation, the first reset security module 161 may determine a magnitude relationship between the number of write command requests and the number of write data requests in the first access requests. For example, the first reset security module 161 may read a current count from a second counter 212, which is the number of the write command requests; and may read a current count from a third counter 213, which is the number of the write data requests. The first reset security module 161 compares the two counts to determine a magnitude relationship therebetween. This magnitude relationship is the magnitude relationship between the number of the write command requests and the number of the write data requests. The first reset security module 161 may determine the first data channel and the second data channel based on this magnitude relationship.

For example, if the magnitude relationship indicates that the number of the write data requests is greater than or equal to that of the write command requests, and the third counter 213 determines that a valid WVALID signal and a valid WLAST signal transmitted by the first hardware unit 13 through a write data channel 261 are detected, the first reset security module 161 may determine that the first data channel includes the write data channel 261 and the second data channel includes a write command channel 241.

Alternatively, if the magnitude relationship indicates that the number of the write data requests is equal to that of the write command requests, and the third counter 213 does not detect the WVALID signal that is transmitted by the first hardware unit 13 through the write data channel 261, the first reset security module 161 may determine that the first data channel includes the write data channel 261 and the second data channel includes the write command channel 241.

For example, if the magnitude relationship indicates that the number of the write command requests is greater than or equal to that of the write data requests, the first reset security module 161 may determine that the first data channel includes the write command channel 241, and the second data channel includes the write data channel 261 and a write response channel 251.

In some examples, if the working status of the interface is the third preset status, that is, the idle status, the first reset security module 161 may determine all data channels in the two or more data channels between the first hardware unit 13 and the second hardware unit 14 as the first data channel, that is, adjust flow control statuses of all the data channels to blocking to intercept the transmission of the new access request generated by the first hardware unit 13 to the bus 15.

Step 432. Determining the adjustment strategies corresponding to the first data channel and the second data channel, respectively.

The first reset security module 161 determines the adjustment strategy corresponding to the first data channel, which is used to adjust the flow control status of the first data channel to blocking.

For example, if the first data channel includes the read command channel, the first reset security module 161 may determine that the adjustment strategy corresponding to the read command channel 221 is to adjust an ARVALID signal transmitted in the read command channel 221 to a low level status, and adjust an ARREADY signal transmitted in the read command channel 221 to a high level status.

For example, if the first data channel includes the write command channel 241, the first reset security module 161 may determine that the adjustment strategy corresponding to the write command channel 241 is to adjust an AWVALID signal transmitted in the write command channel 241 to a low level status, and adjust an AWREADY signal transmitted in the write command channel 241 to a high level status.

For example, if the first data channel includes the write data channel 261, the first reset security module 161 may determine that the adjustment strategy corresponding to the write data channel 261 is to adjust a WVALID signal transmitted in the write data channel 261 to a low level status, and adjust a WREADY signal transmitted in the write data channel 261 to a high level status.

The first reset security module 161 determines the adjustment strategy corresponding to the second data channel, which is used to adjust the flow control status of the second data channel to pass-through.

For example, if the second data channel includes the read data channel 231, the first reset security module 161 may determine that the adjustment strategy corresponding to the read data channel 231 is to adjust a RREADY signal transmitted in the read data channel 231 to a high level status.

For example, if the second data channel includes the write response channel 251, the first reset security module 161 may determine that the adjustment strategy corresponding to the write response channel 251 is to adjust a BREADY signal transmitted in the write response channel 251 to a high level status.

In some examples, when a status of the reset request is the fourth preset status, that is, when no reset request is initiated to the first hardware unit 13, that is, when the first hardware unit 13 and the second hardware unit 14 can be accessed normally, the flow control statuses of the write command channel 241 and the write data channel 261 are both pass-through. Based on this, if the first reset security module 161 determines that the second data channel includes the write command channel 241 and/or the write data channel 261, it may be determined that the adjustment strategies corresponding to the write command channel 241 and the write data channel 261 are to maintain the original level status of the signal transmitted on each data channel.

In some examples, the first reset security module 161 may adjust the level status of the signal transmitted in the corresponding data channel by using a logical control unit group corresponding to the adjustment strategy.

According to the method for resetting a hardware unit in an integrated circuit that is provided in this embodiment of this disclosure, the flow control status to which each data channel needs to be adjusted may be accurately determined based on the first access request, and the adjustment strategy corresponding to each data channel may be accurately determined based on the flow control status to which each data channel needs to be adjusted. After the flow control status of each data channel is adjusted based on this adjustment strategy, an effect of effectively clearing the access requests of which the transmissions are not finished and intercepting the new access request generated by the first hardware unit 13 may be achieved.

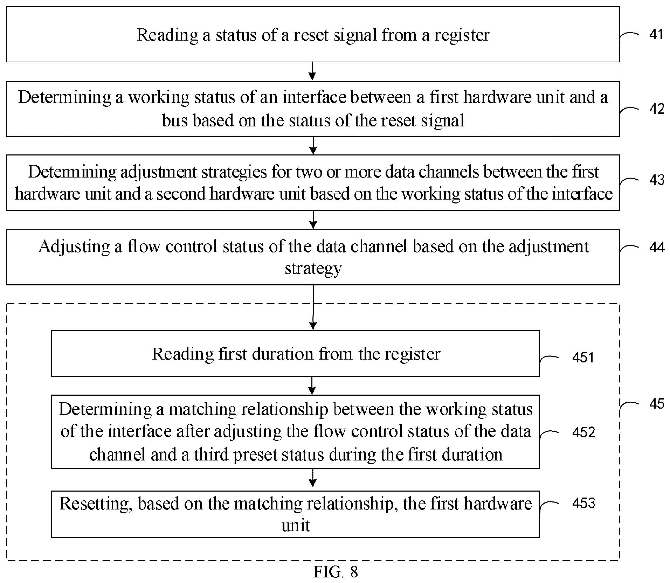

FIG. 8 is a schematic flowchart of a method for resetting a hardware unit in an integrated circuit according to still yet another exemplary embodiment of this disclosure.

In some embodiments, as shown in FIG. 8, on the basis of the embodiment shown in FIG. 4, step 45 may include steps 451 to 453.

Step 451. Reading first duration from the register.

If the first reset security module 161 determines that the first hardware unit 13 needs to be reset, the request status of the reset request for the first hardware unit 13 may be determined by using a timeout counting module 27. If the request status is request succeeded, it may be determined that the first hardware unit 13 is actually reset. If the request status is request failed, it may be determined that the first hardware unit 13 is not reset.

The timeout counting module 27 may read the first duration from the register 17 when the status of the reset signal is the fourth preset status. The first duration is a duration threshold used for timeout monitoring. In some examples, the timeout counting module 27 may control to adjust a QDENY signal to a low level status, so as to indicate that no reset request is initiated to the first hardware unit 13.

Step 452. Determining a matching relationship between the working status of the interface after adjusting the flow control status of the data channel and a third preset status during the first duration.

The timeout counting module 27 may start timing when the first access request exists, or when a data channel corresponding to a write operation and a data channel corresponding to a read operation are both in the non-idle status; and may monitor whether the working status of the interface after adjusting the flow control status of the data channel is the third preset status during the first duration, that is, monitor whether the adjustment strategy is valid, that is, monitor, after the flow control status of the data channel is adjusted, whether transmission of all first access requests has been completed and whether all new access requests generated by the first hardware unit 13 have been intercepted.

Step 453. Resetting, based on the matching relationship, the first hardware unit.

If the matching relationship between the working status of the interface after adjusting the flow control status of the data channel and the third preset status during the first duration is matching, it indicates that the adjustment strategy is valid, and the resetting of the first hardware unit 13 does not affect the bus 15 and the second hardware unit 14. In this case, the first hardware unit 13 may be reset. Correspondingly, the timeout counting module 27 may determine that the request status of the reset request is succeeded and may generate indication information indicating that the request status is succeeded. The first reset security module 161 may reset the first hardware unit 13 based on the indication information.

If the matching relationship between the working status of the interface after adjusting the flow control status of the data channel and the third preset status during the first duration is not matching, it indicates that the adjustment strategy is invalid, and the resetting of the first hardware unit 13 still affects the bus 15 and the second hardware unit 14. In this case, the first hardware unit 13 cannot be reset. Correspondingly, the timeout counting module 27 may determine that the request status is failed and may generate indication information indicating that the request status is failed. The first reset security module 161 may not reset the first hardware unit 13 based on the indication information.

According to the method for resetting a hardware unit in an integrated circuit that is provided in this embodiment of this disclosure, through timeout monitoring, when it is monitored that the working status of the interface is not adjusted to the idle status within a specified period of time, the resetting of the first hardware unit 13 may be terminated in a timely manner, thereby ensuring that the bus 15 can still work normally, and the second hardware unit 14 sharing the bus 15 can also still work normally.

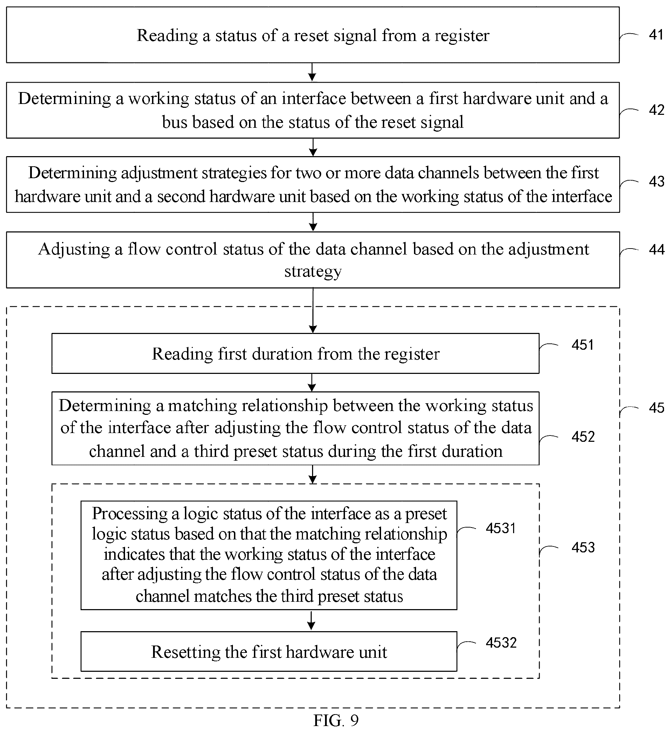

FIG. 9 is a schematic flowchart of a method for resetting a hardware unit in an integrated circuit according to a further exemplary embodiment of this disclosure.

In some embodiments, as shown in FIG. 9, on the basis of the embodiment shown in FIG. 8, step 453 may include steps 4531 and 4532.

Step 4531. Processing a logic status of the interface as a preset logic status based on that the matching relationship indicates that the working status of the interface after adjusting the flow control status of the data channel matches the third preset status.

On the basis that the matching relationship indicates that the working status of the interface after adjusting the flow control status of the data channel matches the third preset status, it may be determined that the adjustment strategy is valid. During the resetting of the first hardware unit 13, there would be no problems that anomalies occur to the bus 15 and the second hardware unit 14 due to access requests of which the transmissions are not finished. However, while being reset, the first hardware unit 13 may generate some unstable signals. If these unstable signals are transmitted to the bus 15, both the bus 15 and the second hardware unit 14 may be affected.

To resolve this problem, the first reset security module 161 may isolate the first hardware unit 13 from the bus 15 by using an isolation control unit 31. The isolation control unit 31 processes the logic status of the interface between the first hardware unit 13 and the bus 15 as the preset logic status. The preset logic status is fixed 0 or 1. In this way, the first hardware unit 13 may transmit signals to the bus 15 according to the preset logic status. In other words, the first hardware unit 13 may output the fixed 0 or 1, that is, a stable signal, to the bus 15. Because the stable signal output from the first hardware unit 13 does not affect the bus 15, it is equivalent to that the first hardware unit 13 is isolated from the bus 15.

Step 4532. Resetting the first hardware unit.

Although the first hardware unit 13 is reset after being isolated by the first reset security module 161, the first hardware unit 13 may also transmit stable signals to the bus 15 according to the preset logic status, without affecting the bus 15 and the second hardware unit 14.

According to the method for resetting a hardware unit in an integrated circuit that is provided in this embodiment of this disclosure, the logic status of the interface between the first hardware unit 13 and the bus 15 is set to the preset logic status, so that the first hardware unit 13 may be enabled to output the stable signals to the bus 15 according to the preset logic status while being reset. The stable signals would not affect the bus 15. Therefore, during the resetting of the first hardware unit 13, the bus 15 can still work normally, and the second hardware unit 14 sharing the bus 15 can still work normally. Therefore, the second operating system 12 running through the second hardware unit 14 can still operate normally, so that the operational stability of the operating system 12 is greatly improved.

### Exemplary electronic device

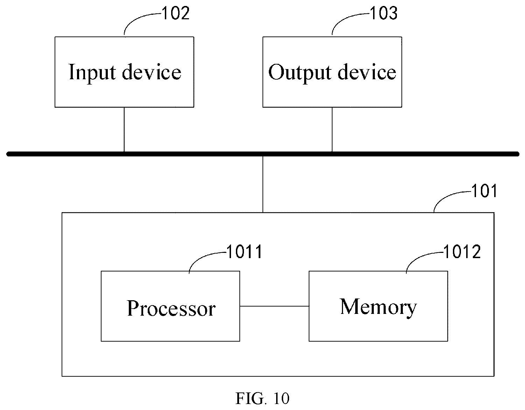

FIG. 10 is a schematic diagram of a structure of an electronic device according to an exemplary embodiment of this disclosure. The electronic device includes an integrated circuit 101, which may be any one of the integrated circuits shown in FIG. 1, FIG. 2, and FIG. 3. The integrated circuit 101 includes at least one processor 1011 and a memory 1012.

The processor 1011 may be a central processing unit (CPU) or another form of processing unit having a data processing capability and/or an instruction execution capability, and may control other components in the electronic device 10 to implement desired functions.

The memory 1012 may include one or more computer program products, which may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 1011 may execute the one or more program instructions to implement the method for resetting a hardware unit in an integrated circuit according to the various embodiments of this disclosure that are described above and/or other desired functions.

In an example, the electronic device may further include an input device 102 and an output device 103. These components are connected to each other through a bus system and/or another form of connection mechanism (not shown).

Certainly, for simplicity, FIG. 10 shows only some of components in the electronic device that are related to this disclosure, and components such as a bus and an input/output interface are omitted. In addition, according to specific application situations, the electronic device may further include any other appropriate components.

### Exemplary computer program product and computer readable storage medium

In addition to the foregoing method and device, embodiments of this disclosure may also provide a computer program product, which includes computer program instructions. When the computer program instructions are run by a processor, the processor is enabled to perform the steps, of the method for resetting a hardware unit in an integrated circuit according to the embodiments of this disclosure, that are described in the "Exemplary method" section described above.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the method for resetting a hardware unit in an integrated circuit according to the embodiments of this disclosure, that are described in the "exemplary method" part described above.

The computer readable storage medium may be one readable medium or any combination of a plurality of readable media. The readable medium may be a readable signal medium or a readable storage medium. The readable storage medium includes, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, and effects mentioned in this disclosure are merely examples but are not for limitation, and it cannot be considered that these advantages, superiorities, and effects are necessary for each embodiment of this disclosure. In addition, specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

## Claims

1. A method for resetting a hardware unit in an integrated circuit, **characterized in that** the method for resetting a hardware unit in an integrated circuit comprises:
reading (41) a status of a reset signal from a register, wherein the reset signal requests to reset a first hardware unit, and the first hardware unit corresponds to a first operating system;
determining (42) a working status of an interface between the first hardware unit and a bus based on the status of the reset signal;
determining (43) adjustment strategies for two or more data channels between the first hardware unit and a second hardware unit based on the working status of the interface, wherein the second hardware unit corresponds to a second operating system;
adjusting (44) a flow control status of the data channel based on the adjustment strategy; and
resetting (45) the first hardware unit based on the working status of the interface after adjusting the flow control status of the data channel.

2. The method for resetting a hardware unit in an integrated circuit according to claim 1, wherein the determining (42) a working status of an interface between the first hardware unit and a bus based on the status of the reset signal comprises:
determining (421) the number of first access requests in response to that the status of the reset signal is a first preset status, wherein the first access request is an access request of which the transmission is not finished among access requests for the first hardware unit to request to access the second hardware unit; and
determining (422) the working status of the interface based on the number of the first access requests.

3. The method for resetting a hardware unit in an integrated circuit according to claim 2, wherein the determining (422) the working status of the interface based on the number of the first access requests comprises:
determining (4221) a request type of the first access requests;
determining (4222) the number of the requests corresponding to the request type of the first access requests; and
determining (4223) the working status of the interface based on the number of the requests.

4. The method for resetting a hardware unit in an integrated circuit according to any one of claims 1 to 3, wherein the determining (43) adjustment strategies for two or more data channels between the first hardware unit and a second hardware unit based on the working status of the interface comprises:
determining (431) a first data channel and a second data channel from the two or more data channels based on the working status of the interface; and
determining (432) the adjustment strategies corresponding to the first data channel and the second data channel, respectively.

5. The method for resetting a hardware unit in an integrated circuit according to claim 4, wherein the determining (431) a first data channel and a second data channel from the two or more data channels based on the working status of the interface comprises:
determining an operation type corresponding to the first access request in response to that the working status of the interface is a second preset status; and
determining the first data channel and the second data channel from the two or more data channels based on the operation type.

6. The method for resetting a hardware unit in an integrated circuit according to claim 5, wherein the determining the first data channel and the second data channel from the two or more data channels based on the operation type comprises:
determining, based on that the operation type is a write operation type, a magnitude relationship between the number of write command requests and the number of write data requests in the first access requests; and
determining the first data channel and the second data channel from the two or more data channels based on the magnitude relationship.

7. The method for resetting a hardware unit in an integrated circuit according to claim 4, wherein the determining (431) a first data channel and a second data channel from the two or more data channels based on the working status of the interface comprises:
determining, based on that the working status of the interface is a third preset status, all data channels in the two or more data channels as the first data channel.

8. The method for resetting a hardware unit in an integrated circuit according to any one of claims 1 to 3, wherein the resetting (45) the first hardware unit based on the working status of the interface after adjusting the flow control status of the data channel comprises:
reading (451) a first duration from the register;
determining (452) a matching relationship between the working status of the interface after adjusting the flow control status of the data channel and a third preset status during the first duration; and
resetting (453), based on the matching relationship, the first hardware unit.

9. The method for resetting a hardware unit in an integrated circuit according to claim 8, wherein the resetting (453), based on the matching relationship, the first hardware unit comprises:
processing (4531) a logic status of the interface as a preset logic status based on that the matching relationship indicates that the working status of the interface after adjusting the flow control status of the data channel matches the third preset status; and
resetting (4532) the first hardware unit.

10. An integrated circuit, **characterized in that** the integrated circuit comprises:
a first hardware unit corresponding to a first operating system;
a second hardware unit corresponding to a second operating system;
a reset security module corresponding to the first hardware unit; and
a register storing a status of a reset signal, wherein the reset signal requests to reset the first hardware unit, wherein the reset security module is configured to read the status of the reset signal from the register.

11. The integrated circuit according to claim 10, wherein the reset security module is further configured to determine a working status of an interface between the first hardware unit and a bus based on the status of the reset signal.

12. The integrated circuit according to claim 10, wherein the reset security module is further configured to determine adjustment strategies for two or more data channels between the first hardware unit and the second hardware unit based on the working status of the interface.

13. The integrated circuit according to claim 10, wherein the reset security module is further configured to adjust a flow control status of the data channel based on the adjustment strategy; and to reset the first hardware unit based on the working status of the interface after adjusting the flow control status of the data channel.

14. A computer readable storage medium, wherein the storage medium stores a computer program, and the computer program is used for implementing the method for resetting a hardware unit in an integrated circuit according to any one of claims 1 to 9.

15. An electronic device, **characterized in that** the electronic device comprises:
a processor (1011); and
a memory (1012), configured to store processor-executable instructions, wherein
the processor (1011) is configured to read the executable instructions from the memory (1012), and execute the instructions to implement the method for resetting a hardware unit in an integrated circuit according to any one of claims 1 to 9; or the electronic device comprises the integrated circuit (101) according to claim 10.

## Amended claims

### Amended claims in accordance with Rule 137(2) EPC.

1. A method for resetting a hardware unit in an integrated circuit (101), the integrated circuit (101) comprising a first hardware unit (13) corresponding to a first operating system (11) and a second hardware unit (14) corresponding to a second operating system (12), **characterized in that** the method comprises:
reading (41) a status of a reset signal from a register (17), wherein the reset signal requests to reset the first hardware unit (13);
determining (42) a working status of an interface between the first hardware unit (13) and a bus (15) based on the status of the reset signal;
determining (43) adjustment strategies for two or more data channels between the first hardware unit (13) and the second hardware unit (14) based on the working status of the interface;
adjusting (44) a flow control status of the data channel based on the adjustment strategy; and
resetting (45) the first hardware unit (13) based on the working status of the interface after adjusting the flow control status of the data channel.

2. The method for resetting a hardware unit in an integrated circuit (101) according to claim 1, wherein the determining (42) a working status of an interface between the first hardware unit (13) and a bus (15) based on the status of the reset signal comprises:
determining (421) the number of first access requests in response to that the status of the reset signal is a first preset status, wherein the first access request is an access request of which the transmission is not finished among access requests for the first hardware unit (13) to request to access the second hardware unit (14); and
determining (422) the working status of the interface based on the number of the first access requests.

3. The method for resetting a hardware unit in an integrated circuit (101) according to claim 2, wherein the determining (422) the working status of the interface based on the number of the first access requests comprises:
determining (4221) a request type of the first access requests;
determining (4222) the number of the requests corresponding to the request type of the first access requests; and
determining (4223) the working status of the interface based on the number of the requests.

4. The method for resetting a hardware unit in an integrated circuit (101) according to any one of claims 1 to 3, wherein the determining (43) adjustment strategies for two or more data channels between the first hardware unit (13) and a second hardware unit (14) based on the working status of the interface comprises:
determining (431) a first data channel and a second data channel from the two or more data channels based on the working status of the interface; and
determining (432) the adjustment strategies corresponding to the first data channel and the second data channel, respectively.

5. The method for resetting a hardware unit in an integrated circuit (101) according to claim 4, wherein the determining (431) a first data channel and a second data channel from the two or more data channels based on the working status of the interface comprises:
determining an operation type corresponding to the first access request in response to that the working status of the interface is a second preset status; and
determining the first data channel and the second data channel from the two or more data channels based on the operation type.

6. The method for resetting a hardware unit in an integrated circuit (101) according to claim 5, wherein the determining the first data channel and the second data channel from the two or more data channels based on the operation type comprises:
determining, based on that the operation type is a write operation type, a magnitude relationship between the number of write command requests and the number of write data requests in the first access requests; and
determining the first data channel and the second data channel from the two or more data channels based on the magnitude relationship.

7. The method for resetting a hardware unit in an integrated circuit (101) according to claim 4, wherein the determining (431) a first data channel and a second data channel from the two or more data channels based on the working status of the interface comprises:
determining, based on that the working status of the interface is a third preset status, all data channels in the two or more data channels as the first data channel.

8. The method for resetting a hardware unit in an integrated circuit (101) according to any one of claims 1 to 3, wherein the resetting (45) the first hardware unit (13) based on the working status of the interface after adjusting the flow control status of the data channel comprises:
reading (451) a first duration from the register (17);
determining (452) a matching relationship between the working status of the interface after adjusting the flow control status of the data channel and a third preset status during the first duration; and
resetting (453), based on the matching relationship, the first hardware unit (13).

9. The method for resetting a hardware unit in an integrated circuit (101) according to claim 8, wherein the resetting (453), based on the matching relationship, the first hardware unit (13) comprises:
processing (4531) a logic status of the interface as a preset logic status based on that the matching relationship indicates that the working status of the interface after adjusting the flow control status of the data channel matches the third preset status; and
resetting (4532) the first hardware unit (13).

10. An integrated circuit (101), comprising a first hardware unit (13) corresponding to a first operating system (11) and a second hardware unit (14) corresponding to a second operating system (12), **characterized in that** the integrated circuit (101) further comprises:
a reset security module (161) corresponding to the first hardware unit (13); and
a register (17) storing a status of a reset signal, wherein the reset signal requests to reset the first hardware unit (13), wherein the reset security module (161) is configured to
read the status of the reset signal from the register (17);
determine a working status of an interface between the first hardware unit (13) and a bus (15) based on the status of the reset signal;
determine adjustment strategies for two or more data channels between the first hardware unit (13) and the second hardware unit (14) based on the working status of the interface;
adjust a flow control status of the data channel based on the adjustment strategy; and
reset the first hardware unit (13) based on the working status of the interface after adjusting the flow control status of the data channel.

11. A computer readable storage medium, wherein the storage medium stores a computer program, and the computer program is used for implementing the method for resetting a hardware unit in an integrated circuit (101) according to any one of claims 1 to 9.

12. An electronic device, comprising:
a processor (1011); and a memory (1012), configured to store processor-executable instructions, wherein the processor (1011) is configured to read the executable instructions from the memory (1012), and execute the instructions to implement the method for resetting a hardware unit in an integrated circuit (101) according to any one of claims 1 to 9; or
the integrated circuit (101) according to claim 10.
